# EUROPEAN PATENT APPLICATION

(11) **EP 1 527 679 A2**
(43) Date of publication of application: **04.05.2005**
(21) Application number: 04022343.0
(22) Date of filing: 20.09.2004
(51) Int. Cl.: A01K 5/01

(54) **Feed trough**

(30) Priority: 28.10.2003 DK 200301578
(71) Applicant: Polyflex ApS, 7480 Vildbjerg (DK)
(72) Inventor: Sorensen, Villy Juhl, 7430 Ikast (DK)
(74) Representative: Gregersen, Niels Henrik

(57) **Abstract**

The present invention concerns a feed trough (1), preferably cast in concrete, including a trough part (2) and a foot part (3), the latter connected to a lower part of the trough part (2) and having a greater cross-section than the lower part of the trough part (2), where the trough part (2) and the foot part (3) are cast in one piece, and that a lower external side (5) of the foot part (3) is adapted for being secured to preferably a slatted floor by means of a number of fittings (4).

## Description

### Scope of the Invention

The present invention concerns a feed trough, preferably cast in concrete, including a trough part and a foot part, the latter connected to a lower part of the trough part and having a greater cross-section than the lower part of the trough part.

### Background of the Invention

Within the agricultural industry it is necessary to build stables where the equipment can be moved around so that the use of the stable can be more flexible, and the animals are thereby not subjected to stress by moving between stable areas, as is the case with conventional stables.

When raising pigs, it is normal today that the pigs are moved from one sty to another sty where equipment and area fit the size and age of the pigs. The equipment is e.g. the feed trough which is to be adapted to the size of the pigs as there is to be used greater and greater feed troughs as the animals grow and the amount of feed increases.

In modem stables, it is common to use slatted floors that allow droppings and other material to pass through the slots and down into an underlying channel or area from where it is removed regularly.

Stable floors may be entirely or partially designed with slatted floor, but typically there will be a slatted floor in the area where the animals eat or stay so that excess food or droppings and water are led away from the stable, and the animals are moving around in fairly dry surroundings.

Feed troughs that are placed on slatted floor are to be stabilised in order not to turn over and thereby to avoid wasting large parts of the feed, and/or they are to be fastened in order that the animals are not pushing around with them and possibly turn them over.

In the British patent publication GB 2 099 275 there is described a four-edged feed trough which is secured to a slatted floor. The securing is provided by means of bolt/nut assemblies where the bolt is connected to the feed trough and extends through apertures in the slats of the slatted floor.

The disadvantage of this type of trough is that firstly it is four-edged, not a suitable design when the animals are eating from the trough as it may be difficult for them to get all the feed up from the trough. This entails waste of feed and hygienic problems as old feed remains can be a source of infection.

Furthermore, this type of trough requires a special slatted floor in which there are regular apertures in the slats of the slatted floor simultaneously with a part of these slats are to be designed with a gripping edge for lateral attachment of the feed trough, implying increased manufacturing costs of the slatted floor.

In the German patent DE 3802989 and the European patent application EP 0440596 it is described how a feed trough is made up of a trough part and a foot part which then are grouted in the slatted floor in order to prevent that the feed trough turns over.

The drawback of this type of feed trough is that they cannot be moved, and the options of using the stable area are thereby frozen as well as the animals are to be moved from stable area to stable area each time they reach a certain age or size.

The grouted feed trough furthermore entails that it is impossible to rearrange the equipment in a stable area if the farmer wants a more suitable placing, e.g. by rebuilding the stable area.

### Object of the Invention

The object of the present invention is to indicate a feed trough which is easy to make and which is mobile.

This is achieved with a feed trough of the kind specified in the preamble of claim 1, and where trough part and the foot part are cast in one piece, and where a lower external side of the foot part is adapted for being secured to preferably a slatted floor by means of a number of fittings.

### Description of the Invention

In the following there is described a feed trough for use in raising pigs in stables with slatted floors, but the invention may readily be applied to raising of other types of animals kept in stables with slatted floors or cages with preferably regular apertures in the bottom, e.g. for calves, horses, furred animals and the like.

In order to achieve easy construction of a feed trough so that it e.g. extends along a whole side of a pigsty, the feed trough is formed of a number of trough parts and a number of foot parts which can be assembled to a feed trough that may be secured to the slatted floor.

The fact that trough part and foot part are cast in one piece minimises the production process, and assembly and mounting of the feed trough is made easier. Trough part and foot part are connected so that the foot part is connected to the lower part of the trough part, whereby the trough part rests on the foot part.

Typically, the foot part will have greater cross-section than the lower part of the trough part in order to ensure that the trough part stands steadily on the slatted floor without risk of overturning.

In an embodiment of the invention, a lower external side of the foot part is arranged to be fastened to preferably a slatted floor by means of a number of fittings. These fittings are releasably mounted to the lower external side of the foot part, e.g. with bolts, screws or the like.

In a preferred embodiment of the invention there is grouted thread or nuts into the lower external side of the foot part so that e.g. bolts passed through the apertures in the fitting may engage the grouted threads or nuts whereby the fitting is secured to the feed trough.

In order to dispose and secure the feed trough arbitrarily on a slatted floor, the said fitting is adapted to be secured to the foot part at an acute angle in relation to the longitudinal direction of the feed trough, preferably an angle of 45 degrees. This entails that the fitting of the feed trough will extend across one or more slats in the slatted floor so that it will be possible to secure the fitting in the part which is exposed in the apertures.

The angle of 45 degrees with which the fitting is disposed in relation to the longitudinal direction of the feed trough, is the angle mostly used as it entails that the fitting becomes longest possible so that the fitting can extend across more slats in the slatted floor.

As it is important that the feed trough stands steadily on the slatted floor, an underside of the said foot part is designed with a transverse groove for receiving the fitting, entailing that the fitting can be hidden up in the underside of the foot part and that the feed trough come to support on the largest possible surface.

Furthermore, accommodation of the fitting in the underside of the foot part ensures that there is no opening between slatted floor and the underside of the feed trough, where feed remains and possible droppings can be pressed in and get stuck and thereby reduce the hygiene level around the feed trough, as in the daily cleaning it is difficult to clean under the permanently mounted feed trough.

Old feed remains and droppings lying in places difficult to access may rot, whereby danger of infection arises by transfer of bacteria to new feed or directly to the pigs.

In one embodiment of the invention, a part of the groove has greater depth in one or more sub-distances, implying that the groove, besides accommodating the fitting, may freely accommodate e.g. bolt ends or screws without their being screwed directly into the foot part of the feed trough.

The depth of the groove may vary along the length of the sub-distance, so that by accommodating e.g. a bolt end, only a certain area of the groove will be deep enough to freely accommodate the bolt end, entailing that the feed trough by fastening can be kept in the desired place and that slackness does not occur in the fitting.

In stables where animal-friendly slatted floors are established, the fitting for use in slatted floors with wide elements are provided with at least one projecting side member.

In order to make a slatted floor more animal environment friendly, the slats are wider than by a normal slatted floor, entailing that the pigs have greater areas in which they may walk, whereby the risk of the pigs getting sore/injured toes is significantly reduced, while at the same time the risk of their getting the toes stuck in the apertures is reduced.

Since the distance between the apertures is greater, it will be necessary to design the fitting with projecting side members so that either fittings or side members are disposed opposite to an aperture whereby it is possible to fasten the feed trough to the slatted floor.

The projecting side members may imply changing the shape of the groove at the underside of the foot part since the projecting side members are to be received in the foot part in the same way as the fitting.

Just as in the fitting, a number of holes may be provided in the projecting side members, through which holes e.g. a bolt may be passed for securing the feed trough. These holes in the fitting and/or the projecting side members may be circular or polygonal.

If the holes are round, it will only be possible to mount the feed trough at a certain position, while by using elongated, circular or rectangular holes it will be possible to mount the feed trough in the right position and then to adjust the position of the feed trough before it is clamped.

In order to secure the feed trough to the slatted floor, the fitting is arranged for being secured by means of T-bolts, enabling mounting the fitting on the slatted floor in the desired position and then mounting the feed trough down in the fitting and fastening it with e.g. screws into the side on a lower external side of the foot part.

The T-bolts enable easy and rapid mounting of the fitting to the slatted floor as the at least two T-bolts of the fitting are passed down through the slats and then turned so that transverse part of the T-bolt is turned in under the slats of the slatted floor, forming a retainer against movement of the fitting. By dismounting, the T-bolts are turned again so that the transverse part of the T-bolt is released from the slats of the slatted floor, and the fitting may be taken up and moved.

Since it would be inexpedient with regard to production to make a feed trough in too great lengths, the feed trough is made up of sections of trough parts and foot parts so that it is possible with sections of e.g. 1 m to construct a feed trough extending from wall to wall in a pigsty.

In order to easily assemble the sections, while at the same time the feed trough is to be tight, end parts of the trough part is designed with tongue and groove, providing that a tongue on a trough part may be laid in over a groove on an end-disposed trough part, whereby the feed trough can be constructed.

The groove-and-tongue assembly of the end-disposed trough part furthermore implies guiding the two trough parts so that adaptation/mounting of a succeeding trough part can occur relatively quickly since the tongue-and-groove assembly partly ensures correct mounting.

In the assembly between tongue and groove, elastic and acid-proof joint filler is used, providing that the feed trough is tight.

In a preferred embodiment of the present invention, an underpart of the groove has less depth than the length of an end-disposed trough part, so that a top joint is formed between abutting trough parts.

This top joint is filled with the previously mentioned elastic and acid-proof joint filler, providing that the feed trough is tight and may absorb expansion and contraction of the material due to temperature variations.

Previously, trough parts were used with a preferably central joint groove at end parts which by assembling of two trough parts enclosed the joint filler so that it was not visible from the top side.

The disadvantage of this solution is that the trough parts are to be made with better tolerance on the plane of the end parts, as two end parts are to abut closely for forming a central joint groove in which a joint filler may be retained, which is typically a two-component joint filler having a sealing and bonding effect.

Furthermore, it will not be easy to separate such trough parts again if the feed trough is to be removed from the pigsty as it is almost impossible to provide access to the joint groove for cutting the joint filler.

By using a tongue-and-groove assembly where there is an upper joint, during mounting of the trough parts it will be easy to place the joint filler in the top joint, and there is no risk that the joint filler runs further down through the tongue-and-groove assembly since the tongue bears against the groove, whereby the joint filler is retained in the top joint.

When the top joint is visible, by dismounting the feed trough it will be easy to cut the joint filler and thereby release a trough part by lifting it up at the end where the lower part of the groove has less depth than the length of the tongue of an end-disposed trough part.

The feed trough may be made of different types of concrete, e.g. concrete mixed with glass fibres, cellulose fibres or plastic, either for reinforcing the concrete or reducing the weight of the feed trough. In a preferred embodiment of the invention, the feed trough is cast in polymeric concrete.

### Short Description of the Drawing

The invention will now be explained more closely with reference to the accompanying drawing, where:
- Fig. 1: shows a cross-section of a feed trough according to the invention;
- Fig. 2: shows a fitting according to the invention;
- Fig. 3: shows the underside of the feed trough according to the invention;
- Fig. 4: shows a tongue-and-groove assembly according to the invention.

### Detailed Description of the Invention

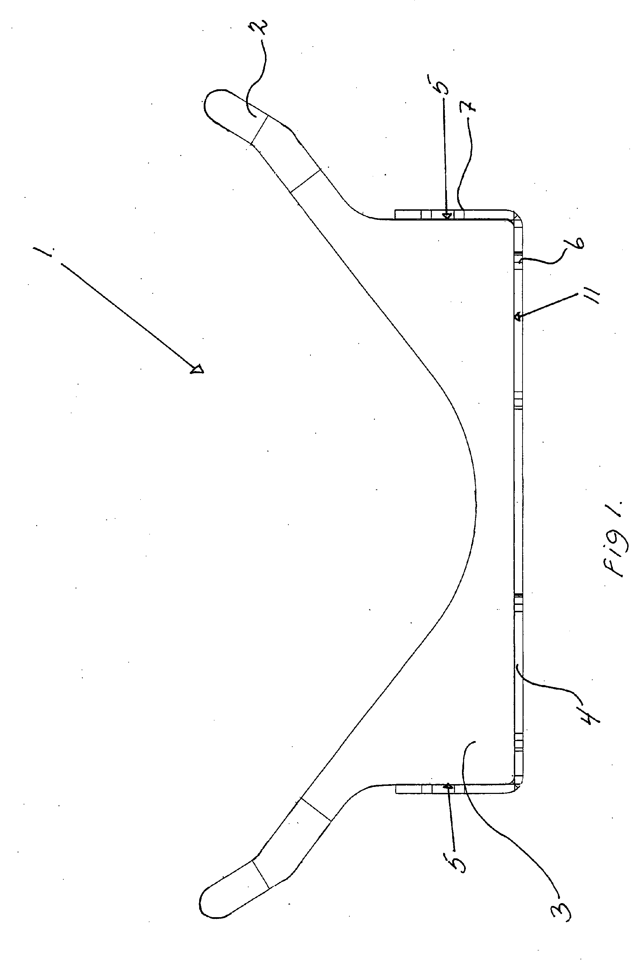

On Fig. 1 is shown a feed trough 1 including a trough part 2 and a foot part 3 having greater cross-section than a lower part of the trough part 2.

A fitting 4 is mounted along a lower external side 5 of the foot part 3 and in under the foot part 3 along the underside 11 and up along the opposite lower external side 5 of the foot part 3.

The fitting 4 is designed with a number of holes 7 in which screws or bolts (not shown) are used for fastening the fitting 4 to the feed trough 1, while the fitting 4 is designed with a number of holes 6 in which T-bolts (not shown) are used for fastening the fitting 4 to the slatted floor (not shown).

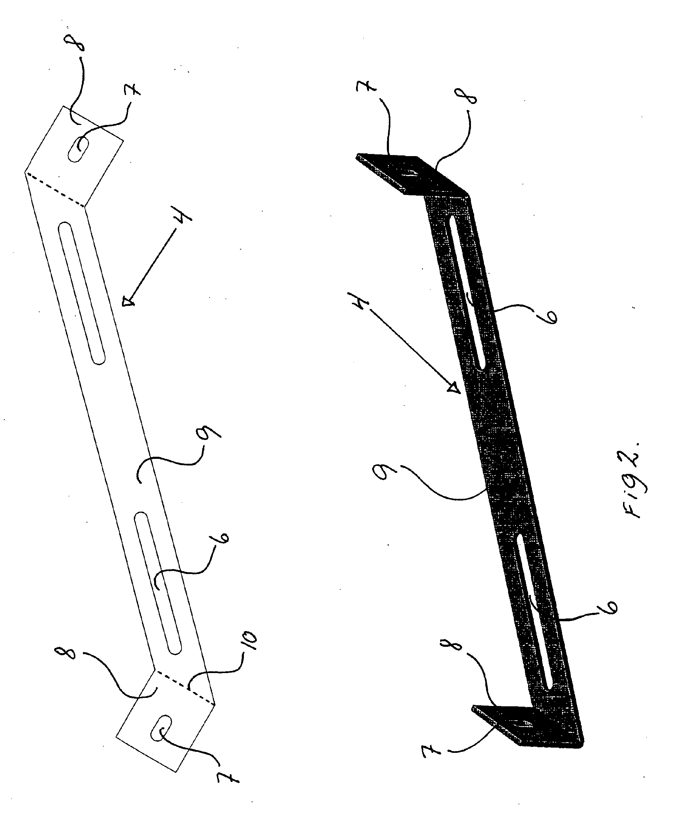

On Fig. 2, the fitting 4 is shown in unfolded form, where the fitting 4 includes an underlying surface 9 which is the part of the fitting 4 disposed against the underside (not shown) of the foot part (not shown), and two side members 7 which are the parts bent about folding lines 10 for being disposed against the lower external side (not shown) of the foot part (not shown).

The holes 6, 7 are shown a circular/rectangular holes, entailing that the T-bolts (not shown) can be placed in the holes 6 opposite to an underlying slot, while bolts/screws (not shown) can be placed in the holes 7 for fastening the fitting 4 to the feed trough (not shown).

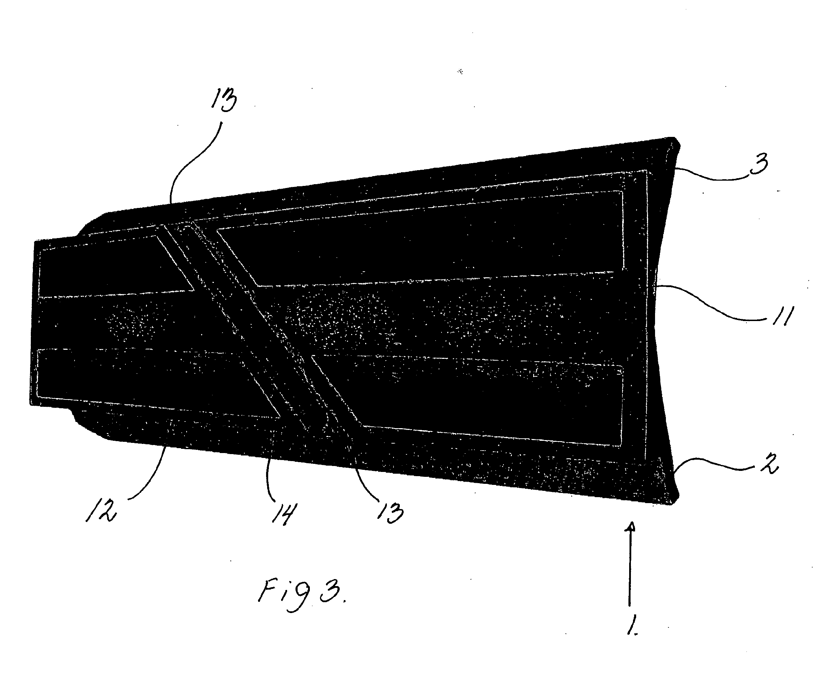

Fig. 3 shows the underside 11 of the foot part 3 where the groove 12 is disposed at an acute angle 14, here 45 degrees, relative to the longitudinal direction of the feed trough 1.

The groove 12 is recessed in relation to the rest of the underside 11, so that the fitting (not shown) can be received in the foot part 3 of the feed trough 1, whereby the feed trough 1 will stand on the underside 11 and not on the fittings (not shown) with which each trough part 2/foot part 3 is provided.

On two sub-distances 13 of the groove 12, the depth of the groove 12 is deeper than the surrounding part of the groove 12, entailing that bolt ends/nuts (not shown) or the like may be accommodated in the groove 12.

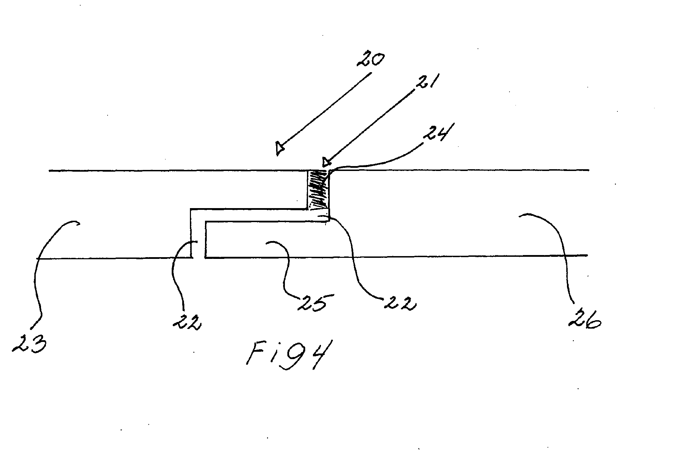

On Fig. 4 is shown how tongue-and-groove joint 20 forms a top joint 21 by groove 22 at end part 23 having less depth than the length of tongue 25 of juxtaposed end part 26. In the top joint 21, joint filler 24 is provided, ensuring that the feed trough (not shown) is tight.

By dismounting the feed trough (not shown), joint filler 24 is to be cut whereby end part 23 and end part 26 are released and can be removed.

## Claims

1. Feed trough (1), preferably cast in concrete, including a trough part (2) and a foot part (3), the latter connected to a lower part of the trough part (2) and having a greater cross-section than the lower part of the trough part (2), **characterised in that** the trough part (2) and the foot part (3) are cast in one piece, and that a lower external side (5) of the foot part (3) is adapted for being secured to preferably a slatted floor by means of a number of fittings (4).

2. Feed trough according to claim 1, **characterised in that** the fitting (4) is adapted to be secured to the foot part (3) at an acute angle (14) in relation to the longitudinal direction of the feed trough (1), preferably an angle of 45 degrees.

3. Feed trough according to claims 1-2, **characterised in that** an underside (11) of the foot part (3) is designed with a transverse groove (12) for receiving the fitting (4).

4. Feed trough according to claims 1-3, **characterised in that** a part of the groove (12) has greater depth in one or more sub-distances (13).

5. Feed trough according to claims 1-4, **characterised in that** for use with slatted floors with wide elements, the fitting (4) are provided with at least one projecting side member.

6. Feed trough according to claim 1, **characterised in that** end parts (23, 26) of the trough part (2) is designed with groove (22) and tongue (25).

7. Feed trough according to claim 6, **characterised in that** a bottom part of the groove (22) has less depth than the length of the tongue (25) of a juxtaposed trough part (2), i.e. an top joint (21) is formed between adjacent trough parts (2).

8. Feed trough according to claim 1, **characterised in that** it is cast in polymeric concrete.

9. Feed trough according to claim 1, **characterised in that** the fittings (4) are adapted for being secured by means of T-bolts.
